# EUROPÄISCHE PATENTSCHRIFT

(11) **EP 2 509 265 B1**
(45) Veröffentlichungstag und Bekanntmachung des Hinweises auf die Patenterteilung: **04.12.2013**
(21) Anmeldenummer: 11161630.6
(22) Anmeldetag: 08.04.2011
(51) Int. Cl.: H04L 12/40, H04L 29/06

(54) **Zugangsschutzgerät für ein Automatisierungsnetzwerk**
Access protection device for an automation network
Appareil de protection d'accès pour un réseau d'automatisation

(43) Veröffentlichungstag der Anmeldung: 10.10.2012
(73) Patentinhaber: Siemens Aktiengesellschaft, 80333 München (DE)
(72) Erfinder: Gerlach, Hendrik, 91058 Erlangen (DE); Schmid, Wolfgang, 90592 Schwarzenbruck-Lindelburg (DE)

(56) Entgegenhaltungen:
- EP-A2- 1 283 632
- WO-A2-2005/047991

## Beschreibung

Die Erfindung betrifft ein Zugangsschutzgerät für ein Automatisierungsnetzwerk, insbesondere ein Zugangsschutzgerät für ein Automatisierungsnetzwerk, das mit einer Automatisierungsanlage verbunden ist.

Aus WO 2005/047991 A2 ist ein Verfahren zum Warten von Feldgeräten bekannt, bei dem ein Wartungsrechner eines Geräteherstellers in einem Firmennetzwerk des Feldgeräteherstellers angeordnet ist. Der Wartungsrechner ist mit einem Feldgerät über das Firmennetzwerk, ein öffentliches Netzwerk und ein Kundennetzwerk verbunden. Dabei sind das Firmennetzwerk und das Kundennetzwerk jeweils durch Firewall-Rechner gegenüber dem öffentlichen Netzwerk abgesichert. Im öffentlichen Netzwerk ist ein Verzeichnisserver-Rechner vorgesehen, bei dem sich eine Kunden-Einheit und der Wartungsrechner anmelden. Außerdem vergibt der Verzeichnisserver-Rechner auf eine Kundenanfrage eine Sitzungsidentifikationsnummer und wählt eine Netzwerkadresse eines mit dem öffentlichen Netzwerk verbundenen Relais-Servers aus. Diese Sitzungsidentifikationsnummer wird an die Kunden-Einheit und an den Wartungsrechner weiterleitet. Über den Relais-Server wird mittels der Sitzungsidentifikationsnummer eine Peer-to-Peer-Verbindung zum Austausch von Feldgeräteinformationen zwischen die Kunden-Einheit und dem Wartungsrechner ermöglicht.

In EP 1 283 632 A2 ist ein Verfahren zur Übertragung von Daten beschrieben, bei dem ausgehend von einem Web-Client eine Verbindungsanforderung zum Aufbau eines Übertragungskanals an einen Webserver gesendet wird. Ausgehend von einem zu bedienenden bzw. zu beobachtenden System wird eine Verbindungsanforderung zum Aufbau eines ersten Übertragungskanals an den Webserver gesendet. Diese Anforderung bleibt offen, so dass ein Datentransfer-Tunnel zwischen System und Webserver erzeugt wird. Bei der Verbindungsanforderung des Web-Clients wird zwischen Web-Client und Webserver mindestens ein weiterer Übertragungskanal erstellt. Der Web-Client nimmt zum bidirektionalen Senden und Empfangen von Nutzdaten über den Datentransfer-Tunnel Kontakt mit dem zu bedienenden bzw. zu beobachtenden System auf.

Automatisierungsgeräte werden heute zunehmend über Ethernet vernetzt. Damit gewinnt auch das Thema Netzwerksicherheit mehr und mehr Bedeutung. Der Schutz von abgrenzbaren Bereichen durch Sicherheitsgeräte an den Grenzen ist heute Stand der Technik. In der Automatisierungstechnik schlägt sich dies als Zellenkonzept nieder. Typische Sicherheitsgeräte sind Firewalls. Sie verfolgen den Protokollablauf und überprüfen neben Quell- und Zieladressen sowie anderen wichtigen Protokollparametern auch den Protokollzustand. Solche Firewalls werden deshalb auch Stateful Packet Inspection Firewalls genannt.

Demgegenüber liegt der Erfindung die Aufgabe zugrunde, ein verbessertes Zugangsschutzgerät für ein Automatisierungsnetzwerk, ein verbessertes Verfahren zum Betrieb eines Zugangsschutzgerätes und ein verbessertes digitales Speichermedium für ein Zugangsschutzgerät zu schaffen.

Die Aufgabe der Erfindung wird durch die unabhängigen Patentansprüche gelöst. Ausführungsformen der Erfindung sind in den abhängigen Patentansprüchen gegeben.

Die Erfindung betrifft ein Zugangsschutzgerät für ein Automatisierungsnetzwerk, das mit einer Automatisierungsanlage verbunden ist, die zur Durchführung eines Automatisierungsprozesses ausgebildet ist. Unter einem Automatisierungsprozess kann beispielsweise ein automatisierter Fertigungs- oder Produktionsprozess verstanden werden. Diese, sowie andere automatisierte Prozesse werden hier als Automatisierungsprozess bezeichnet.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Automatisierungsanlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Außerdem werden durch das Automatisierungsnetzwerk Komponenten zur Überwachung und Führung des Automatisierungsprozesses mit den Steuerungs- und Regelungskomponenten bzw. auch untereinander verbunden. Dies umfasst auch direktes Bedienen und Beobachten der Steuerungs- und Regelungskomponenten. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder Umparametrieren einer oder mehrerer Steuerungseinheiten im Automatisierungsnetzwerk. Es ist zu beachten, dass auch eine Kommunikation in dem Automatisierungsnetzwerk stattfinden kann, die nicht in Echtzeit erfolgt. Eine solche Kommunikation erfolgt über automatisierungsspezifische Protokolle.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller (PLC) mit Steuerungs- und/oder Regelungsaufgaben bzw. Steuerungs- und/oder Regelungsfähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Eine mit dem Automatisierungsnetzwerk verbundene Automatisierungsanlage umfasst ein oder mehrere Sensoren und Aktuatoren. Die Aktuatoren werden von zumindest einer Steuerungseinrichtung gesteuert. Messwerte der Sensoren können von der Steuerungseinrichtung oder von anderen Netzwerkgeräten erfasst und verarbeitet werden. Insbesondere können Messwerte auch durch ein Zugangsschutzgerät nach Ausführungsformen der Erfindung erfasst und verarbeitet werden. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Prozess abläuft, in dem z.B. ein Produkt hergestellt wird.

Außerdem können zur Anbindung von Sensoren auch Verbindungen verwendet werden, die kein Automatisierungsprotokoll verwenden. Beispielsweise können Messwerte eines Sensors auch über Drahtleitungen an Netzwerkgeräte und/oder ein Zugangsschutzgerät nach Ausführungsformen der Erfindung übertragen werden.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen. Eine in einen Computer oder PC integrierte speicherprogrammierbare Steuerung kann insbesondere eine Steuerung sein, die software-implementiert ist. In diesem Fall liegt also keine Hardware-Komponente vor, die ausschließlich die Funktion der speicherprogrammierbaren Steuerung ausführt. Eine softwareimplementierte Steuerung kann beispielsweise auf einem Prozessor des Computers oder PCs ablaufen, der auch für andere Funktionen des Computers oder PCs verwendet wird.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das PROFIBUS-Protokoll (z. B. gemäß IEC 61158/EN50170), ein PROFIBUS-DP-Protokoll, ein PROFIBUS-PA-Protokoll, ein PROFINET-Protokoll, ein PROFINET-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein wie zum Beispiel Modbus, FFB oder andere. Als Automatisierungsprotokoll im Sinne der vorliegenden Beschreibung können auch beliebige Kombinationen der vorgenannten Protokolle vorgesehen sein.

Der Automatisierungsprozess kann in zumindest zwei Zuständen ablaufen. Beispielsweise ist der erste Zustand der normale Betriebszustand des Automatisierungsprozesses und der zweite Zustand ein Zustand, der nicht dem normalen Betriebszustand entspricht. Dies kann zum Beispiel dadurch bedingt sein, dass eins oder mehrere Geräte der Automatisierungsanlage ausfallen oder bestimmte Messparameter nicht den Sollwerten entsprechen. Dies kann auch zum Beispiel dann der Fall sein, wenn der Prozess beispielsweise durch den Defekt einer verfahrenstechnischen Komponenten, die z.B. durch das Automatisierungsnetzwerk gesteuert wird, und den Produktions- oder Fertigungsprozess durchführt, gestört ist oder ausfällt.

Zum Automatisierungsnetzwerk werden auch Geräte gezählt, die örtlich von einem Hauptteil des Automatisierungsnetzwerks getrennt sind aber über eine gesicherte Verbindung mit dem Automatisierungsnetzwerk verbunden sind. Eine solche gesicherte Verbindung kann beispielsweise ein VPN-Tunnel sein.

Das Zugangsschutzgerät umfasst ein digitales Speichermedium, Prozessormittel und Netzwerkanschlüsse. Das digitale Speichermedium ist zur Speicherung von zumindest ersten und zweiten Regeln ausgebildet. Die Prozessormittel können beispielsweise einen oder mehrere Prozessoren umfassen, die Programminstruktionen ausführen. Die Prozessormittel sind zum Auslesen der zumindest ersten und zweiten Regeln, zum Verarbeiten der zumindest ersten und zweiten Regeln und zum Empfang und zur Weiterleitung von Daten über die Netzwerkanschlüsse ausgebildet. Über die Netzwerkanschlüsse können also Daten von dem Automatisierungsnetzwerk und/oder von der Automatisierungsanlage durch das Zugangsschutzgerät empfangen werden und auch Daten von dem Zugangsschutzgerät an das Automatisierungsnetzwerk weitergeleitet werden. Das Zugangsschutzgerät kann also entweder nur mit dem Automatisierungsnetzwerk oder sowohl mit dem Automatisierungsnetzwerk als auch mit der Automatisierungsanlage, insbesondere deren Sensoren verbunden sein.

Die ersten Regeln definieren in einem ersten Zustand des Automatisierungsprozesses, welche empfangenen Daten weitergeleitet werden und welche empfangenen Daten nicht weitergeleitet werden. Die Entscheidung über die Weiterleitung der Daten kann beispielsweise im Hinblick auf den Sender und den Empfänger der Daten oder auch im Hinblick auf die Art der Daten erfolgen. Die Regeln definieren also die Zugriffsrechte von Geräten von innerhalb oder außerhalb des Automatisierungsnetzwerks und/oder der Automatisierungsanlage auf andere Geräte des Automatisierungsnetzwerks und/oder der Automatisierungsanlage. Der erste Zustand kann beispielsweise der normale Betriebszustand der Automatisierungsanlage sein. Dies bedeutet, dass der Automatisierungsprozess wie geplant abläuft.

Die Prozessormittel sind außerdem zum Empfang zumindest eines Signals ausgebildet. Das zumindest eine Signal kann einen Hinweis auf eine Änderung des Zustands des Automatisierungsprozesses umfassen. Eine Änderung des Zustands kann beispielsweise dann vorliegen, wenn der Automatisierungsprozess nicht mehr wie geplant abläuft. Dies können zum Beispiel auch immer wieder anzutreffende Anlagen- oder Prozesszustände sein, zum Beispiel Inbetriebsetzung, Wartung, Diagnose, Störung, Notfall oder ein kritischer Zustand eines Messwertes wie zum Beispiel Temperatur, Druck, Flussgeschwindigkeit, Flüssigkeitshöhe oder der Ausfall eines Gerätes der Automatisierungsanlage.

Das zumindest eine Signal kann beispielsweise direkt den Hinweis auf die Zustandsänderung umfassen. Alternativ kann das Signal auch einen oder mehrere Messwerte umfassen, die dann von den Prozessormitteln analysiert werden, sodass die Prozessormittel selbst bestimmen, ob eine Zustandsänderung des Automatisierungsprozesses vorliegt. Nach Empfang des zumindest einen Signals definieren die zweiten Regeln, welche empfangenen Daten weitergeleitet werden und welche empfangenen Daten nicht weitergeleitet werden. Die zweiten Regeln umfassen also ebenso wie die ersten Regeln Zugriffsrechte, wobei sich allerdings die zweiten Regeln von den ersten Regeln unterscheiden.

Beispielsweise können die zweiten Regeln solche Zugriffsrechte definieren, dass eine Beseitigung der Störung, eine Inbetriebsetzung, eine Wartung, eine Diagnose oder eine Analyse eines Problems durch einen Anwender über ein Gerät des Automatisierungsnetzwerks durchführbar ist, was nach den Zugriffsrechten der ersten Regeln nicht möglich ist.

Alternativ können die zweiten Regeln Zugriffsrechte so definieren, dass ein Zugriff auf die Automatisierungsanlage von einem Gerät des Automatisierungsnetzwerk verhindert wird, damit ein chemischer oder sonstiger Prozess innerhalb der Automatisierungsanlage ungestört weiterlaufen kann.

Nach Ausführungsformen der Erfindung sind die Prozessormittel zum Empfang des zumindest einen Signals über zumindest einen der Netzwerkanschlüsse ausgebildet. Mit anderen Worten kann das Signal beispielsweise direkt von der Automatisierungsanlage, zum Beispiel von einem Sensor, oder von einem Gerät des Automatisierungsnetzwerks empfangen werden.

Nach Ausführungsformen der Erfindung umfasst das Zugangsschutzgerät einen Anschluss zum Empfang des zumindest einen Signals. Das zumindest eine Signal umfasst zumindest einen Messparameter des Automatisierungsprozesses, der von einem Sensor der Automatisierungsanlage gemessen wurde.

Nach Ausführungsformen der Erfindung sind die Prozessormittel zum Vergleich des zumindest einen Messparameters mit einem Schwellwert ausgebildet. Der Messparameter kann beispielsweise von einem Sensor der Automatisierungsanlage gemessen worden sein und eine Flüssigkeitshöhe, eine Durchflussgeschwindigkeit, ein Druck oder eine Temperatur sein. Die Prozessormittel vergleichen diesen zumindest einen Messparameter mit zumindest einem Schwellwert. Bei mehreren Messparametern werden die mehreren Messparameter auch mit mehreren Schwellwerten verglichen. Dabei wird ein Messwert immer mit dem zugehörigen Schwellwert verglichen. Dies bedeutet beispielsweise, dass ein Druckwert auch immer mit dem Schwellwert für diesen Druckwert verglichen wird. Es ist auch der Vergleich mehrerer Messwerte gleicher Art mit mehreren Schwellwerten gleicher Art möglich. Beispielsweise können mehrere Temperaturwerte mit mehreren Schwellwerten für diese Temperaturwerte verglichen werden. Dabei würde Temperaturwert A mit Temperatur-Schwellwert A, Temperaturwert B mit Temperatur-Schwellwert B usw. verglichen.

Der Vergleich wird durch die Prozessormittel durch Rechenoperation durchgeführt. Diese können beispielsweise eine Skalierung oder Linearisierung umfassen. Die Prozessormittel detektieren die Änderung des Zustands des Automatisierungsprozesses, wenn der zumindest eine Messparameter den zumindest einen Schwellwert über- oder unterschreitet. Es wird also eine Zustandsänderung des Automatisierungsprozesses durch die Prozessormittel detektiert. Nach dieser Zustandsänderung werden nicht mehr die ersten Regeln, sondern die zweiten Regeln durch die Prozessormittel angewandt. Der zweite Zustand kann beispielsweise ein Notzustand oder ein Wartungszustand sein.

Nach Ausführungsformen der Erfindung sind die Prozessormittel zum Empfang mehrerer Signale ausgebildet und/oder das zumindest eine Signal umfasst mehrere Messparameter. Die Prozessormittel sind zur Detektierung einer Zustandsänderung des Automatisierungsprozesses unter Anwendung von Rechenoperationen auf die mehreren Messparameter ausgebildet. Diese Rechenoperationen können beispielsweise eine Skalierung oder eine Linearisierung sein. Auch ist beispielsweise denkbar, dass bei Empfang mehrerer Messparameter nur ein Teil dieser Messparameter die jeweiligen Schwellwerte über- oder unterschreiten müssen. Beispielsweise können die Prozessormittel so ausgebildet sein, dass eine Zustandsänderung des Automatisierungsprozesses detektiert wird, wenn zwei von drei Messparametern die jeweiligen Schwellwerte über- oder unterschreiten.

Nach Ausführungsformen der Erfindung definieren die ersten und die zweiten Regeln Zugriffsrechte in Abhängigkeit von einem Sender und einem Empfänger der Daten. Zusätzlich kann auch die Art der Daten berücksichtigt werden.

Nach Ausführungsformen der Erfindung sind die ersten Regeln in zumindest einer erste Regelgruppe und die zweiten Regeln in zumindest einer zweiten Regelgruppe zusammengefasst. Die Zusammenfassung der Regeln in Regelgruppen verbessert die Übersichtlichkeit für den Anwender. Beispielsweise kann es eine Regelgruppe geben, nach der alle Zugriffe auf Netzwerkgeräte des Automatisierungsnetzwerks blockiert werden. Dies könnte beispielsweise die erste Regelgruppe sein. Die zweite Regelgruppe könnte dann für den Fall einer Störung den Zugriff von einer Notsteuerstelle des Automatisierungsnetzwerks auf einen Server des Automatisierungsnetzwerks zulassen.

Nach Ausführungsformen der Erfindung ist der erste Zustand des Automatisierungsprozesses ein Betriebszustand und der zweite Zustand ein Notzustand. Die zweiten Regeln erlauben einen Zugriff auf alle Netzwerkgeräte des Automatisierungsnetzwerks von einem Notkontroll-Netzwerkgerät aus. Dies erlaubt dem Anwender im Falle eines Notzustandes, zügig Maßnahmen zu ergreifen, um den Notzustand zu beenden. Dies geschieht automatisch dadurch, dass die Prozessormittel das erste Signal empfangen. Der Anwender muss also nicht manuell den Zugriff durch das Notkontroll-Netzwerkgerät erlauben. Dies ermöglicht einen schnellen Eingriff im Fall von einem Notzustand des Automatisierungsprozesses.

Nach Ausführungsformen der Erfindung ist der erste Zustand des Automatisierungsprozesses ein Betriebszustand und der zweite Zustand ein Notzustand. Die zweiten Regeln erlauben einen Zugriff auf alle Netzwerkgeräte des Automatisierungsnetzwerks von jedem Netzwerkgerät des Automatisierungsnetzwerks aus. In diesem Fall kann also ein Anwender von jedem Netzwerkgerät des Automatisierungsnetzwerks den Notzustand beheben, ohne dass manuell die Zugriffsrechte geändert werden müssen.

Die Verwendung der zweiten Regeln anstelle der ersten Regeln kann auch als Änderung des Zustands des Automatisierungsnetzwerks bezeichnet werden. Die ersten Regeln definieren hierbei einen ersten Zustand des Automatisierungsnetzwerks und die zweiten Regeln definieren einen zweiten Zustand des Automatisierungsnetzwerks. Dadurch, dass ein Umschalten des Zustands des Automatisierungsnetzwerks automatisch durch eine Zustandsänderung des Automatisierungsprozesses ausgelöst wird, folgt der Zustand des Automatisierungsnetzwerks immer dem Zustand des Automatisierungsprozesses, ohne dass manuell der Protokollzustand des Automatisierungsnetzwerks geändert werden muss. Dies ist vorteilhaft, um schnell auf sich ändernde Prozesszustände des Automatisierungsprozesses reagieren zu können.

In einem weiteren Aspekt betrifft die Erfindung ein Automatisierungssystem mit einer Automatisierungsanlage und einem Automatisierungsnetzwerk.
In noch einem weiteren Aspekt betrifft die Erfindung ein Verfahren zum Betrieb eines Zugangsschutzgeräts in einem Automatisierungsnetzwerk, das mit einer Automatisierungsanlage verbunden ist, die zur Durchführung eines Automatisierungsprozesses ausgebildet ist. Das Verfahren umfasst die folgenden Schritte.

Zunächst wird der Automatisierungsprozess in einem ersten Zustand durchgeführt. In diesem Fall werden die ersten Regeln aus einem Speichermedium des Zugangsschutzgerätes durch Prozessormittel des Zugangsschutzgerätes ausgelesen. Die ersten Regeln definieren Zugriffsrechte für einen Zugriff von einem ersten Teilnetzwerk des Automatisierungsnetzwerks in ein zweites Teilnetzwerk des Automatisierungsnetzwerks. Bei Anwendung der ersten Regeln durch die Prozessormittel definieren die ersten Regeln, welche Daten weitergeleitet werden und welche Daten nicht weitergeleitet werden. Dies kann von der Art der Daten, von dem Sender der Daten und von dem Empfänger der Daten abhängig sein.

Falls sich der Zustand des Automatisierungsprozesses ändert, empfangen die Prozessormittel des Zugangsschutzgerätes zumindest ein Signal, das einen Hinweis auf die Zustandsänderung des Automatisierungsprozesses umfasst. In diesem Fall lesen die Prozessormittel zweite Regeln aus dem Speichermedium aus und wendet diese an. Die zweiten Regeln definieren, welche empfangenen Daten weitergeleitet werden und welche empfangenen Daten nicht weitergeleitet werden. Auch die zweiten Regeln definieren also Zugriffsrechte, die allerdings von den ersten Regeln verschieden sind.

Nach Ausführungsformen der Erfindung umfasst das zumindest eine Signal zumindest einen Messparameter des Automatisierungsprozesses, der von einem Sensor der Automatisierungsanlage gemessen wurde. Bei Empfang des Signals vergleichen die Prozessormittel den zumindest einen Messparameter mit zumindest einem zugehörigen Schwellwert. Die Prozessormittel detektieren eine Änderung des Zustands des Automatisierungsprozesses, wenn der Messparameter den zumindest einen Schwellwert über- oder unterschreitet.

Nach Ausführungsformen der Erfindung definieren die ersten und die zweiten Regeln Zugriffsrechte in Abhängigkeit von einem Sender und einem Empfänger der Daten. Auch die Art der Daten kann die Zugriffsrechte definieren. Unter der Art der Daten werden hier insbesondere z.B. Automatisierungsdaten oder auch Daten verschiedener Automatisierungssubprotokolle, Internetdaten, Videodaten oder Überwachungsdaten verstanden.

Nach Ausführungsformen der Erfindung sind die ersten Regeln in zumindest einer ersten Regelgruppe und die zweiten Regeln in zumindest einer zweiten Regelgruppe zusammengefasst. Dies erhöht die Übersichtlichkeit für den Anwender.

In noch einem weiteren Aspekt betrifft die Erfindung ein digitales Speichermedium für ein Zugangsschutzgerät in einem Automatisierungsnetzwerk, das mit einer Automatisierungsanlage verbunden ist, die zur Durchführung eines Automatisierungsprozesses ausgebildet ist. Das digitale Speichermedium umfasst Programminstruktionen, die das Zugangsschutzgerät bei Ausführung zu einem Verfahren nach Ausführungsformen der Erfindung veranlassen.

Nachfolgend werden Ausführungsformen der Erfindung anhand der Figuren näher erläutert. Es zeigen:
- Figur 1: ein Zugangsschutzgerät für ein Automatisierungs-netzwerk, das mit einer Automatisierungsanlage verbunden ist;
- Figur 2: ein Flussdiagramm eines Verfahrens nach Ausführungsformen der Erfindung; und
- Figur 3: eine schematische Darstellung zweier Zustände des Automatisierungsnetzwerks.

Elemente der nachfolgenden Figuren, die einander entsprechen, sind mit denselben Bezugszeichen gekennzeichnet.

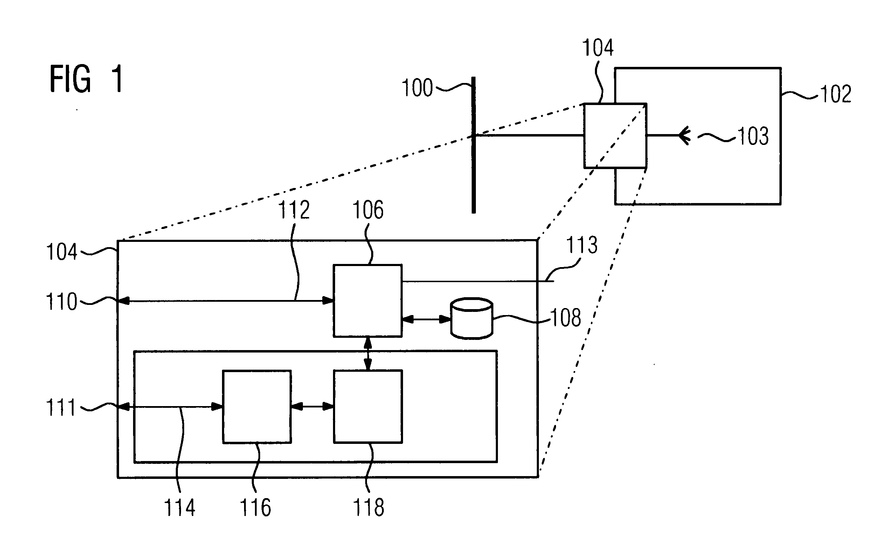

Figur 1 ist ein Blockdiagramm eines Zugangsschutzgeräts 104, einem ersten Teil 100 eines Automatisierungsnetzwerk und einer Automatisierungsanlage 102, in der sich ein zweiter Teil 103 des Automatisierungsnetzwerks befindet. Das erste Automatisierungsteilnetzwerk 100 ist über das Zugangsschutzgerät 104 mit dem zweiten Automatisierungsteilnetzwerk 103 verbunden. Daten, die von dem ersten Automatisierungsteilnetzwerk 100 an die Netzwerkgeräte in dem zweiten Automatisierungsteilnetzwerk 103 gesendet werden, werden über das Zugangsschutzgerät 104 gesendet, das die Daten unter Anwendung von Regeln weiterleitet oder ihre Weiterleitung blockiert. Daten, die von dem zweiten Automatisierungsteilnetzwerk 103 an das erste Automatisierungsteilnetzwerk 100 gesendet werden, werden über das Zugangsschutzgerät 104 gesendet. Das Zugangsschutzgerät 104 wendet auch hier Regeln an, um Zugriffsrechte unterschiedlicher Geräte des Automatisierungsteilnetzwerks 103 auf unterschiedliche Geräte des ersten Automatisierungsteilnetzwerks 100 zu überprüfen. Es können auch weitere Automatisierungsanlagen 102 mit weiteren zweiten Automatisierungsteilnetzwerken an das erste Automatisierungsteilnetzwerk angeschlossen sein (hier nicht dargestellt). Im Betriebszustand können beispielsweise Geräte des ersten Automatisierungsteilnetzwerks 100 nicht oder nur eingeschränkt auf Geräte des zweiten Automatisierungsteilnetzwerks 103 zugreifen. Ein Zugriff wird durch das Zugangsschutzgerät 104 unterbunden bzw. eingeschränkt. Ebenso kann im normalen Betriebszustand ein Zugriff eines Gerätes des Automatisierungsteilnetzwerks 103 auf ein Gerät des Automatisierungsnetzwerks 100 durch das Zugangsschutzgerät 104 unterbunden oder eingeschränkt werden.

Das Zugangsschutzgerät 104 umfasst einen Prozessor 106 und ein digitales Speichermedium 108. Der Prozessor 106 ist zur Ausführung von Programminstruktionen, die auf dem digitalen Speichermedium 108 gespeichert sind, ausgebildet. Es ist zu beachten, dass die Programminstruktionen auch durch mehrere Prozessoren des Zugangsschutzgeräts ausgeführt werden können. Über einen Netzwerkanschluss 110 empfängt das Zugangsschutzgerät 104 zu filternde Datenpakete 112, die durch den Prozessor 106 verarbeitet werden. Der Prozessor 106 wird durch Ausführung der Programminstruktionen auf dem digitalen Speichermedium 108 dazu veranlasst, Regeln, die ebenfalls auf dem digitalen Speichermedium 108 gespeichert sind, anzuwenden. Die Regeln können auch auf einem anderen hier nicht dargestellten Speichermedium gespeichert werden.

Je nach Entscheidung aus der Regelverarbeitung wird das zu filternde Datenpaket 112 ausgangsseitig über Netzwerkanschluss 113 versendet oder auch nicht. Die Regeln definieren also, ob ein Signal weitergeleitet oder geblockt wird. In der Gegenrichtung werden zu filternden Datenpakete 112 über Netzwerkanschluss 113 empfangen und ggf. über Netzwerkanschluss 110 versendet. Auch hier definieren die Regeln, ob ein Signal weitergeleitet oder geblockt wird.

Die anzuwendenden Regeln richten sich nach dem Prozesszustand des Automatisierungsprozesses, der in der Automatisierungsanlage 102 abläuft. In einem ersten Prozesszustand wendet der Prozessor 106 erste Regeln an und in einem zweiten Zustand wendet der Prozessor zweite Regeln an.

Das Zugangsschutzgerät 104 ist ebenfalls dazu ausgebildet, über einen Anschluss 111 ein erstes Signal 114 zu empfangen. Das erste Signal 114 umfasst hierbei einen Hinweis auf den Zustand des Automatisierungsprozesses, der in der Automatisierungsanlage 102 abläuft. Der Anschluss 111 kann ein weiter Netzwerkanschluss oder ein Anschluss für eine andere Verbindung zwischen dem Zugangsschutzgerät und der Automatisierungsanlage sein. Die kann beispielsweise eine Zweidrahtleitung oder auch eine drahtlose Verbindung, wie z.B. Funk oder WLAN, sein. Der Anschluss 111 kann aber auch mit Anschluss 110 zusammenfallen, wenn 111 auch als Netzwerkanschluss ausgebildet ist bzw. das Signal 114 über ein Netzwerkprotokoll übermittelt wird. Das Signal 114 kann außerdem über den Anschluss 113 empfangen werden, mit dem das Zugangsschutzgerät 104 mit dem zweiten Automatisierungsteilnetzwerk 103 verbunden ist.

Das Signal 114 kann zum Beispiel einen oder mehrere Messwerte umfassen, die durch ein Erfassungsmodul 116 von dem Zugangsschutzgerät 104 erfasst werden. Die Erfassung kann alternativ auch durch den Prozessor 106 erfolgen. Die empfangenen Messwerte können dann durch ein Verknüpfungsmodul 118 verknüpft werden. Die Verknüpfung kann alternativ auch durch den Prozessor 106 durchgeführt werden. Durch die Verknüpfung der Messwerte kann der Prozessor 106 Rechenoperationen ausführen, wodurch er eine Änderung des Zustands des Automatisierungsprozesses detektieren kann. Diese Rechenoperationen können beispielsweise Skalierungen oder Linearisierungen sein. Als Rechenoperation kann auch verstanden werden, dass die Messwerte mit zugehörigen Schwellwerten verglichen werden und eine Zustandsänderung bei über- oder unterschreiten der Schwellwerte detektiert wird.

Das Signal 114 kann alternativ auch von einem anderen Gerät des Automatisierungsteilnetzwerks 103 an das Zugangsschutzgerät 104 ausgegeben werden und in diesem Fall keine Messwerte, sondern direkt einen Hinweis auf eine Zustandsänderung des Prozesszustandes umfassen.

Die Regeln, die die Zugriffsrechte definieren, können entweder einzeln aufgeführt sein oder in Gruppen zusammengefasst sein.

Einzeln aufgeführte Regeln können in Pseudocode beispielsweise folgendermaßen aussehen:
*pass inet proto tcp from <EmergencyConsole> to <Server> **when PlantState equal Hardfault***

Dies bedeutet, dass Zugriffe über alle TCP-Protokolle von dem Notkontroll-Netzwerkgerät zum Server zugelassen werden, wenn der Automatisierungsprozess gestört ist.

Eine weitere mögliche Regel in Pseudocode könnte folgendermaßen aussehen:
*drop inet proto tcp from <EmergencyConsole>* to *<Server> **when PlantState not equal HardFault***

Dies bedeutet, dass Zugriffe von dem Notkontroll- Netzwerkgerät zum Server über alle TCP-Protokolle gesperrt sind, wenn der Automatisierungsprozess nicht gestört ist.

Folgende Regel im Pseudocode bedeutet, dass der Zugriff von einer Konsole auf eine Steuerungseinheit für einen Kessel erlaubt wird, wenn der Kessel eine kritische Temperatur erreicht:
*pass inet proto tcp from <Console>* to *<BoilerPLC> **when BoilerTemperature > CriticalLimit***

Regelgruppen können in Pseudocode beispielsweise folgendermaßen aussehen:

Es kann auch zwischen verschiedenen Zugriffsarten unterschieden werden. Beispielsweise kann Lesen erlaubt werden, das Schreiben jedoch verboten werden. Eine weitere Zugriffsart ist das Ausführen von ausführbaren Programminstruktionen, die individuell erlaubt oder verboten werden kann.

Das Zugangsschutzgerät 104 kann auch dazu verwendet werden, den Zugriff auf das erste Automatisierungteilnetzwerk 100 oder ein Teilnetzwerk in einer Automatisierungsteilanlage 102 von einem weiteren Netzwerk (z.B. ein Büronetzwerk oder das Internet) aus zu kontrollieren. In diesem Fall ist das Zugangsschutzgerät 104 über den Netzwerkanschluss 110 und das erste Automatisierungsteilnetzwerk 100 mit dem weiteren Netzwerk verbunden. Hier kann das Zugangsschutzgerät auch dazu verwendet werden, Zugriffe aus dem weiteren Netzwerk auf Geräte des Automatisierungsteilnetzwerks 103 zu kontrollieren. Solche Zugriffe würden über das Zugangsschutzgerät 104 durch das Automatisierungsteilnetzwerk 100 auf das Automatisierungsteilnetzwerk 103 erfolgen.

Es können auch zwei oder mehrere Zugangsschutzgeräte 104 verwendet werden, wenn das Automatisierungsnetzwerk beispielsweise aus zwei oder mehr Teilnetzwerkern besteht, die über das Internet miteinander verbunden sind. In dem einen Teilnetzwerk kann beispielsweise eine Leitwarte lokalisiert sein, die über das Internet auf ein zweites Teilnetzwerk - z.B. eine oder mehrere Pumpstation(en) - zugreift und die steuern kann. Zugriffe auf das erste und ein zweites als auch Zugriffe von dem ersten und einem zweiten Netzwerk können so über das jeweilige Zugangsschutzgeräte kontrolliert werden.

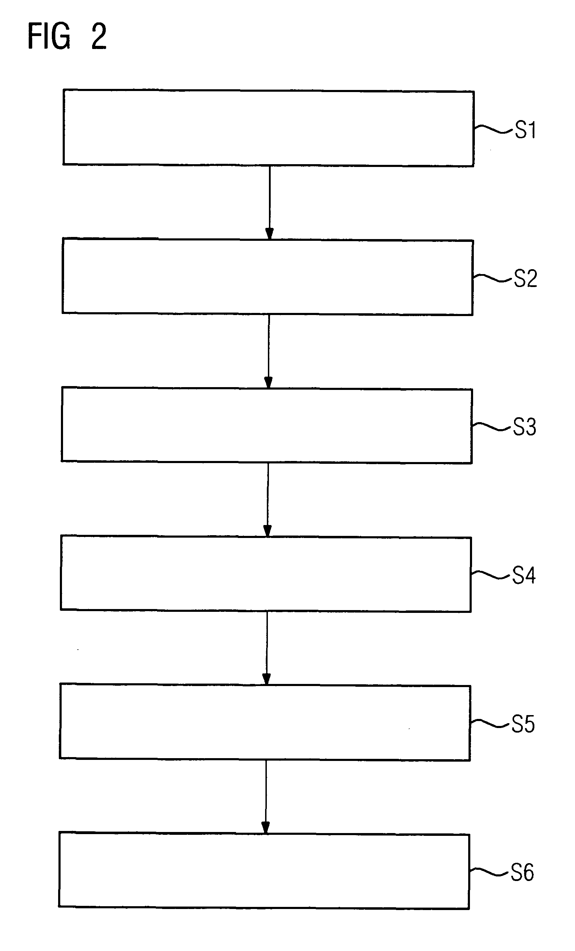

Figur 2 ist ein Flussdiagramm eines Verfahrens zum Betrieb eines Zugangsschutzgerätes in einem Automatisierungsnetzwerk, das von einem Prozessor des Zugangsschutzgerätes durch Ausführung von Programminstruktionen auf einem digitalen Speichermedium des Zugangsschutzgerätes durchgeführt werden kann. Das Automatisierungsnetzwerk ist dabei wie in Figur 1 dargestellt mit einer Automatisierungsanlage verbunden, die zur Durchführung eines Automatisierungsprozesses ausgebildet ist.

Der Automatisierungsprozess kann sich in einem ersten oder in einem zweiten Zustand befinden.

In einem ersten Schritt S1 befindet sich der Automatisierungsprozess in einem ersten Zustand. Der erste Zustand kann beispielsweise der normale Betriebszustand des Automatisierungsprozesses sein. Bei einem Fertigungs- oder Produktionsprozess kann dies der normale Betrieb der Automatisierungsanlage sein. In einem zweiten Schritt S2 werden von dem Prozessor des Zugangsschutzgerätes erste Regeln aus dem Speichermedium des Zugangsschutzgerätes ausgelesen. Die Daten werden unter Anwendung der ersten Regeln in Schritt S3 durch das Zugangsschutzgerät weitergeleitet. Die ersten Regeln definieren dabei, welche Daten weitergeleitet werden und welche Daten nicht weitergeleitet werden. Dies kann beispielsweise in Abhängigkeit vom Sender, vom Empfänger und von der Art der Daten erfolgen. Mit anderen Worten definieren die ersten Regeln erste Zugriffsrechte.

Falls sich der Zustand des Automatisierungsprozesses ändert, wird in Schritt S4 ein Signal an das Zugangsschutzgerät ausgegeben. Das Signal umfasst einen Hinweis auf die Zustandsänderung. Das Signal wird vorzugsweise vom Prozessor des Zugangsschutzgerätes empfangen und verarbeitet. Das Signal kann dabei entweder direkt den Hinweis auf die Zustandsänderung umfassen oder aber auch Messwerte umfassen, die durch den Prozessor verarbeitet werden. Im letzteren Fall detektiert der Prozessor selbst die Zustandsänderung des Automatisierungsprozesses. Dies kann beispielsweise über Rechenoperationen wie einer Linearisierung oder einer Skalierung erfolgen und/oder aber durch einen einfachen Vergleich der Messwerte mit zugehörigen Schwellwerten.

Nach Empfang des Signals werden in Schritt S5 zweite Regeln aus dem Speichermedium durch den Prozessor ausgelesen und in Schritt S6 angewandt. Die zweiten Regeln definieren, welche Daten weitergeleitet werden und welche Daten nicht weitergeleitet werden sollen. Die zweiten Regeln definieren also Zugriffsrechte für den zweiten Zustand des Automatisierungsprozesses. Der zweite Zustand des Automatisierungsprozesses kann beispielsweise ein Störungs- oder Notfall sein, bei dem der Zugriff auf alle Geräte der Automatisierungsanlage und des Automatisierungsnetzwerks von einem Notkontroll- Netzwerkgerät erlaubt ist.

Dem Benutzer wird also eine schnelle Behebung von Not-, Wartungs- oder Störzuständen des Automatisierungsprozesses ohne manuelle Umstellung der Zugriffsrechte ermöglicht.

Dadurch, dass sich der Protokollzustand des Automatisierungsnetzwerks immer dem Prozesszustand des Automatisierungsprozesses anpasst, entfällt ein manuelles Umschalten. Der Protokollzustand des Automatisierungsnetzwerks wird durch die ersten und die zweiten Regeln definiert. Bei Anwendung der ersten Regeln befindet sich das Automatisierungsnetzwerk beispielsweise in einem ersten Protokollzustand und bei Anwendung der zweiten Regeln in einem zweiten Protokollzustand.

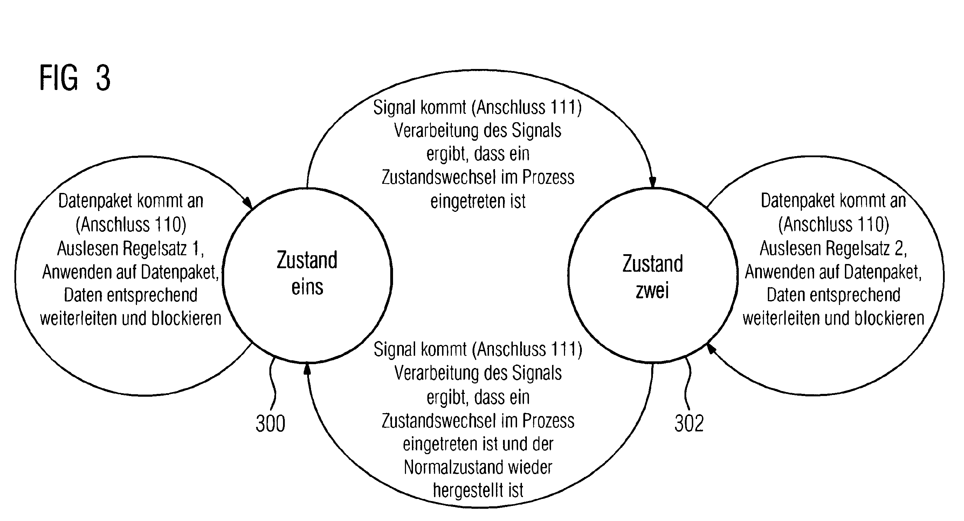

Figur 3 ist eine schematische Darstellung zweier Zustände 300 und 302. Im ersten Zustand 300 werden beim Empfang eines Datenpaktes über den Anschluss 110 (s. Fig. 1) des Zugangsschutzgeräts die ersten Regeln ausgelesen und auf das Datenpaket angewendet. Die Daten werden den Regeln entsprechend weitergeleitet oder blockiert.

Falls nun über den Anschluss 111 (s. Fig. 1) ein Signal empfangen wird, das einen Hinweis auf eine Zustandsänderung des Automatisierungsprozesses umfasst, wird der Zustand des Automatisierungsnetzwerks in den zweiten Zustand 302 geändert. Im zweiten Zustand 302 werden über Anschluss 110 ankommende Datenpakete nach den zweiten Regeln weitergeleitet oder blockiert.

Falls ein weiteres Signal empfangen wird, während sich das Automatisierungsnetzwerk im zweiten Zustand 302 befindet, das einen Hinweis auf eine Zustandsäänderung des Automatisierungsprozesses umfasst, wird der Zustand des Automatisierungsnetzwerks in den ersten Zustand 300 geändert.

### Liste der Bezugszeichen

- 100: Automatisierungsteilnetzwerk
- 102: Automatisierungsanlage
- 103: Automatisierungsteilnetzwerk
- 104: Zugangsschutzgerät
- 106: Prozessor
- 108: digitales Speichermedium
- 110: Netzwerkanschluss
- 111: Anschluss
- 112: Datenpakete
- 113: Netzwerkanschluss
- 114: Signal
- 116: Erfassungsmodul
- 118: Verknüpfungsmodul
- 300: Zustand 1
- 302: Zustand 2

## Patentansprüche

1. Zugangsschutzgerät (104) für ein Automatisierungsnetzwerk (100), das mit einer Automatisierungsanlage (102) verbunden ist, die zur Durchführung eines Automatisierungsprozesses ausgebildet ist, wobei der Automatisierungsprozess in zumindest zwei Zuständen ablaufen kann und das Zugangsschutzgerät
- ein digitales Speichermedium (108),
- Prozessormittel (106), und
- Netzwerkanschlüsse (110)
umfasst,
wobei das digitale Speichermedium zur Speicherung von zumindest ersten und zweiten Regeln ausgebildet ist, wobei sich die zweiten Regeln von den ersten Regeln unterscheiden,
wobei die Prozessormittel zum Auslesen der zumindest ersten und zweiten Regeln, zum Verarbeiten der Regeln und zum Empfang und zur Weiterleitung von Daten über die Netzwerkanschlüsse ausgebildet sind,
wobei die ersten Regeln in einem ersten Zustand des Automatisierungsprozesses definieren, welche empfangenen Daten weitergeleitet werden und welche empfangenen Daten nicht weitergeleitet, werden,
wobei die Prczessormittel zum Empfang zumindest eines Signals (114) über einen der Netzwerkanschlüsse von der Automatisierungsanlage ausgebildet sind,
wobei das zumindest eine Signal einen Hinweis auf eine Änderung des Zustands des Automatisierungsprozesses umfasst,
wobei die Prozessormittel zur Detektion einer Zustandsänderung durch Auswertung des Signals ausgebildet sind, und
wobei nach Empfang des zumindest einen Signals die zweiten Regeln definieren, welche empfangenen Daten weitergeleitet werden und welche empfangenen Daten nicht weitergeleitet werden.

2. Zugangsschutzgerät nach Anspruch 1, wobei der Prozessor zum Empfang des zumindest einen Signals über zumindest einen der Netzwerkanschlüsse ausgebildet ist.

3. Zugangsschutzgerät nach Anspruch 1, wobei das Zugangsschutzgerät einen Anschluss zum Empfang des zumindest einen Signals umfasst, und wobei das zumindest eine Signal zumindest einen Messparameter des Automatisierungsprozesses umfasst, der von einem Sensor der Automatisierungsanlage gemessen wurde.

4. Zugangsschutzgerät nach Anspruch 3, wobei der Prozessor zum Vergleich des zumindest einen Messparameters mit einem Schwellwert ausgebildet ist, und wobei der Prozessor zur Detektierung der Änderung des Zustands ausgebildet ist, wenn der zumindest eine Messparameter den zumindest einen Schwellwert über- oder unterschreitet.

5. Zugangsschutzgerät nach einem der vorhergehenden Ansprüche, wobei der Prozessor zum Empfang mehrer Signale ausgebildet ist, und/oder wobei das zumindest eine Signal mehrere Messparameter umfasst, und wobei der Prozessor zur Detektierung einer Zustandsänderung des Automatisierungsprozesses unter Anwendung von Rechenoperationen auf die mehreren Messparameter ausgebildet ist.

6. Zugangsschutzgerät nach einem der vorhergehenden Ansprüche, wobei die ersten und die zweiten Regeln Zugriffsrechte in Abhängigkeit von einem Sender und einem Empfänger der Daten definieren.

7. Zugangsschutzgerät nach einem der vorhergehenden Ansprüche, wobei die ersten Regeln in zumindest einer ersten Regelgruppe und die zweiten Regeln in zumindest einer zweiten Regelgruppe zusammengefasst sind.

8. Zugangsschutzgerät nach einem der vorhergehenden Ansprüche, wobei der erste Zustand des Automatisierungsprozesses ein Betriebszustand und der zweite Zustand ein Notzustand ist, und wobei die zweiten Regeln einen Zugriff auf alle Netzwerkgeräte des Automatisierungsnetzwerks von einem Notkontrollnetzwerkgerät aus erlauben.

9. Zugangsschutzgerät nach einem der Ansprüche 1-7, wobei der erste Zustand des Automatisierungsprozesses ein Betriebszustand und der zweite Zustand ein Notzustand ist, und wobei die zweiten Regeln einen Zugriff auf alle Netzwerkgeräte des Automatisierungsnetzwerks von jedem Netzwerkgerät des Automatisierungsnetzwerks aus erlauben.

10. Verfahren zum Betrieb eines Zugangsschutzgeräts in einem Automatisierungsnetzwerk, das mit einer Automatisierungsanlage verbunden ist, die zur Durchführung eines Automatisierungsprozesses ausgebildet ist, wobei das Verfahren die folgenden Schritte umfasst:
- Durchführung (S1) des Automatisierungsprozesses in einem ersten zustand,
- Auslesen (S2) von ersten Regeln aus einem Speichermedium des Zugangsschutzgeräts durch einen Prozessor des Zugangsschutzgeräts,
- Weiterleitung (S3) von Daten unter Anwendung der ersten Regeln, wobei die ersten Regeln definieren, welche von dem Zugangsschutzgerät (104) empfangene Daten weitergeleitet werden und welche von dem Zugangsschutzgerät (104) empfangene Daten nicht weitergeleitet werden,
- Empfang (S4) zumindest eines Signals, wobei das zumindest eine Signal einen Hinweis auf eine Änderung des Zustands des Automatisierungsprozesses umfasst, wobei der Prozessor diese Änderung des Zustands durch Auswertung des Signals detektiert,
- Auslesen (S5) von zweiten Regeln aus dem Speicher-medium, wobei sich die zweiten Regeln von den ersten Regeln unterscheiden, und
- Weiterleitung (S6) von Daten unter Anwendung der zweiten Regeln, wobei die zweiten Regeln definieren, welche vom dem Zugangsschutzgerät (104) empfangenen Daten weitergeleitet werden und welche vom dem Zugangsschutzgerät (104) empfangenen Daten nicht weitergeleitet werden.

11. Verfahren nach Anspruch 10, wobei die ersten und die zweiten Regeln Zugriffsrechte in Abhängigkeit von einem Sender und einem Empfänger der Daten definieren.

12. Verfahren nach Anspruch 10, wobei die ersten Regeln in zumindest einer ersten Regelgruppe und die zweiten Regeln in zumindest einer zweiten Regelgruppe zusammengefasst sind.

13. Computerprogramm, das Computer-ausführbare Programminstrulztionen bereitstellt, die wenn auf einem Computer ausgeführt, den Computer veranlassen, ein Verfahren nach einem der Ansprüche 10-12 auszuführen.

## Claims

1. An access protection accessory (104) for an automation network (100) which is connected to an automation installation (102) which is designed to perform an automation process, wherein the automation process can be executed in at least two states and the access protection accessory comprises
- a digital storage medium (108),
- processor means (106), and
- network ports (110),
wherein the digital storage medium is designed to store at least first and second rules, wherein the second rules are different than the first rules,
wherein the processor means are designed to read the at least first and second rules, to process the rules and to receive and forward data via the network ports,
wherein the first rules, in a first state of the automation process, define which received data are forwarded and which received data are not forwarded,
wherein the processor means are designed to receive at least one signal (114) via one of the network ports from the automation installation,
wherein the at least one signal comprises advice of a change in the state of the automation process,
wherein the processor means are designed to detect a state change by evaluating the signal, and
wherein following reception of the at least one signal the second rules define which received data are forwarded and which received data are not forwarded.

2. Access protection accessory according to Claim 1, wherein the processor is designed to receive the at least one signal via at least one of the network ports.

3. Access protection accessory according to Claim 1, wherein the access protection accessory comprises a port for receiving the at least one signal, and wherein the at least one signal comprises at least one measurement parameter from the automation process, which measurement parameter has been measured by a sensor in the automation installation.

4. Access protection accessory according to Claim 3, wherein the processor is designed to compare the at least one measurement parameter with a threshold value, and wherein the processor is designed to detect the change in the state if the at least one measurement parameter is above or below the at least one threshold value.

5. Access protection accessory according to one of the preceding claims, wherein the processor is designed to receive a plurality of signals, and/or wherein the at least one signal comprises a plurality of measurement parameters, and wherein the processor is designed to detect a state change in the automation process by applying computation operations to the plurality of measurement parameters.

6. Access protection accessory according to one of the preceding claims, wherein the first and second rules define access rights on the basis of a transmitter and a receiver of the data.

7. Access protection accessory according to one of the preceding claims, wherein the first rules are combined in at least one first rule group and the second rules are combined in at least one second rule group.

8. Access protection accessory according to one of the preceding claims, wherein the first state of the automation process is an operating state and the second state is an emergency state, and wherein the second rules allow access to all network accessories in the automation network from an emergency inspection network accessory.

9. Access protection accessory according to one of Claims 1-7, wherein the first state of the automation process is an operating state and the second state is an emergency state, and wherein the second rules allow access to all network accessories in the automation network from any network accessory in the automation network.

10. Method for operating an access protection accessory in an automation network which is connected to an automation installation which is designed to perform an automation process, wherein the method comprises the following steps:
- the automation process is performed (S1) in a first state,
- first rules are read (S2) from a storage medium in the access protection accessory by a processor in the access protection accessory,
- data are forwarded (S3) by applying the first rules, wherein the first rules define which data received from the access protection accessory (104) are forwarded and which data received from the access protection accessory (104) are not forwarded,
- at least one signal is received (S4), wherein the at least one signal comprises advice of a change in the state of the automation process, wherein the processor detects this change in the state by evaluating the signal,
- second rules (S5) are read from the storage medium, wherein the second rules are different than the first rules, and
- data are forwarded (S6) by applying the second rules, wherein the second rules define which data received from the access protection accessory (104) are forwarded and which data received from the access protection accessory (104) are not forwarded.

11. Method according to Claim 10, wherein the first and second rules define access rights on the basis of a transmitter and a receiver of the data.

12. Method according to Claim 10, wherein the first rules are combined in at least one first rule group and the second rules are combined in at least one second rule group.

13. Computer program which provides computer-executable program instructions which, when executed on a computer, prompt the computer to perform a method according to one of claims 10-12.

## Revendications

1. Appareil ( 104 ) de protection d'accès pour un réseau ( 100 ) d'automatisation, qui est relié à une installation ( 102 ) d'automatisation constituée pour effectuer un processus d'automatisation, le processus d'automatisation pouvant se dérouler dans au moins deux états et l'appareil de protection d'accès comprenant
- un support ( 108 ) de mémoire numérique,
- des moyens ( 106 ) à processeur, et
- des connexions ( 110 ) de réseau;
dans lequel le support de mémoire numérique est constitué pour la mémorisation d'au moins deux premières et deux deuxièmes règles, les deuxièmes règles étant différentes des premières règles,
dans lequel les moyens à processeur sont constitués pour la lecture des au moins premières et deuxièmes règles, pour le traitement des règles et pour la réception et l'acheminement de données par les connexions de réseau,
dans lequel les premières règles définissent dans un premier état du processus d'automatisation celles des données reçues qui sont acheminées et celles des données reçues qui ne sont pas acheminées,
dans lequel les moyens à processeur sont constitués pour la réception d'au moins un signal ( 114 ) par l'une des connexions de réseau de l'installation d'automatisation,
dans lequel le au moins un signal comprend une indication d'une modification de l'état du processus d'automatisation, dans lequel les moyens à processeur sont constitués pour la détection d'une modification d'état par exploitation du signal, et
dans lequel, après réception du au moins un signal, les deuxièmes règles définissent celles des données reçues qui sont acheminées et celles des données reçues qui ne sont pas acheminées.

2. Appareil de protection d'accès suivant la revendication 1, dans lequel le processeur est constitué pour la réception du au moins un signal par au moins l'une des connexions de réseau.

3. Appareil de protection d'accès suivant la revendication 1, dans lequel l'appareil de protection d'accès comprend une borne de réception du au moins un signal, et dans lequel le au moins un signal comprend au moins un paramètre de mesure du processus d'automatisation, qui a été mesuré par un capteur de l'installation d'automatisation.

4. Appareil de protection d'accès suivant la revendication 3, dans lequel le processeur est constitué pour la comparaison du au moins un paramètre de mesure à une valeur de seuil, et dans lequel le processeur est constitué pour la détection de la modification de l'état, lorsque le au moins un paramètre de mesure devient supérieur ou devient inférieur à la au moins une valeur de seuil.

5. Appareil de protection d'accès suivant l'une des revendications précédentes, dans lequel le processeur est constitué pour la réception de plusieurs signaux, et/ou dans lequel le au moins un signal comprend plusieurs paramètres de mesure, et dans lequel le processeur est constitué pour la détection d'une modification d'état du processus d'automatisation en appliquant des opérations de calcul aux plusieurs paramètres de mesure.

6. Appareil de protection d'accès suivant l'une des revendications précédentes, dans lequel les premières et les deuxièmes règles définissent des droits d'accès en fonction d'un émetteur et d'un récepteur des données.

7. Appareil de protection d'accès suivant l'une des revendications précédentes, dans lequel les premières règles sont rassemblées en au moins un premier groupe de règles et les deuxièmes règles sont rassemblées en au moins un deuxième groupe de règles.

8. Appareil de protection d'accès suivant l'une des revendications précédentes, dans lequel le premier état du processus d'automatisation est un état de fonctionnement et le deuxième état est un état d'urgence, et dans lequel les deuxièmes règles autorisent un accès à tous les appareils du réseau d'automatisation par un appareil de réseau de contrôle d'urgence.

9. Appareil de protection d'accès suivant l'une des revendications 1 à 7, dans lequel le premier état du processus d'automatisation est un état de fonctionnement et le deuxième état est un état d'urgence, et dans lequel les deuxièmes règles autorisent un accès à tous les appareils du réseau d'automatisation par chaque appareil du réseau d'automatisation.

10. Procédé pour faire fonctionner un appareil de protection d'accès dans un réseau d'automatisation, qui est relié à une installation d'automatisation constituée pour effectuer un processus d'automatisation, le procédé comprenant les stades suivantes :
- on effectue ( S1 ) le processus d'automatisation dans un premier état,
- on lit ( S2 ) des premières règles dans un support de mémoire de l'appareil de protection d'accès par un processeur de l'appareil de protection d'accès,
- on achemine ( S3 ) des données en appliquant les premières règles, les premières règles définissant celles des données reçues par l'appareil ( 104 ) de protection d'accès qui sont acheminées et celles des données reçues par l'appareil ( 104 ) de protection d'accès qui ne sont pas acheminées,
- on reçoit ( S4 ) au moins un signal, le au moins un signal comprenant une indication d'une modification de l'état du processus d'automatisation, le processeur détectant cette modification de l'état en exploitant le signal,
- on lit ( S5 ) des deuxièmes règles dans le support de mémoire, les deuxièmes règles étant différentes des premières règles, et
- on achemine ( S6 ) des données en appliquant les deuxièmes règles, les deuxièmes règles définissant celles des données reçues par l'appareil ( 104 ) de protection d'accès qui sont acheminées et celles des données reçues par l'appareil ( 104 ) de protection d'accès qui ne sont pas acheminées.

11. Procédé suivant la revendication 10, dans lequel les premières et les deuxièmes règles définissent des droits d'accès en fonction d'un émetteur et d'un récepteur des données.

12. Procédé suivant la revendication 10, dans lequel les premières règles sont rassemblées en au moins un premier groupe de règles et les deuxièmes règles sont rassemblées en au moins un deuxième groupe de règles.

13. Programme d'ordinateur, qui met à disposition des instructions de programme pouvant être exécutées sur un ordinateur et qui, lorsqu'elles sont exécutées sur un ordinateur, font que l'ordinateur effectue un procédé suivant l'une des revendications 10 à 12.
